# FASCICULE DE BREVET EUROPEEN

(11) **EP 2 912 357 B1**
(45) Date de publication et mention de la délivrance du brevet: **02.08.2017**
(21) Numéro de dépôt: 13789852.4
(22) Date de dépôt: 16.10.2013
(51) Int. Cl.: F16K 31/56, F16K 17/40

(54) **VANNE A USAGE UNIQUE**
VENTIL ZUM EINMALIGEN GEBRAUCH
SINGLE-USE VALVE

(30) Priorité: 23.10.2012 FR 1260076
(43) Date de publication de la demande: 02.09.2015
(73) Titulaire: Conseil et Technique, 31650 Lauzerville (FR); Centre National d'Etudes Spatiales (CNES), 31000 Toulouse (FR)
(72) Inventeur: VALEMBOIS, Guy, F-31650 Lauzerville (FR); DILHAN, Denis, F-31190 Auterive (FR); SALVETAT, Bernard, F-31000 Toulouse (FR)
(74) Mandataire: Rhein, Alain
(86) Numéro de dépôt international: PCT/FR2013/052467
(87) Numéro de publication internationale: WO 2014/064369

(56) Documents cités:
- GB-A- 2 424 692
- US-B1- 6 260 570
- US-B1- 6 302 171

## Description

La présente invention a pour objet un dispositif de vanne à usage unique.

On connaît déjà des vannes à usage unique, de type soupape de décompression par exemple, dont le fonctionnement nécessite l'emploi de moyens pyrotechniques où, de manière générale, des pièces mobiles, d'ouverture ou de fermeture de la vanne, sont retenues par des éléments fusibles. Ces vannes existantes présentent des inconvénients, notamment en ce que leur étanchéité ne peut pas être garantie, et que par conséquent que l'utilisation de moyens pyrotechniques doit être proscrite dans certains domaines, selon la nature du fluide à faire circuler.

La présente invention se rapporte plus particulièrement, mais non limitativement, au domaine des vannes utilisées dans l'industrie spatiale, que ce soient des vannes normalement fermées ou normalement ouvertes, lesquelles doivent répondre à certaines spécifications.

Ainsi, de manière optimale, outre le fait que l'ouverture ou la fermeture doit être réalisée de manière certaine, une telle vanne doit répondre aux objectifs techniques suivants :
- absence de système d'étanchéité par joint (présence d'une barrière métallique continue entre le fluide et l'extérieur de la vanne, qu'elle soit fermée ou ouverte après fonctionnement),
- absence de pollution externe issue du fonctionnement de la vanne,
- absence de pollution interne issue du fonctionnement de la vanne,
- limitation des chocs induits par le fonctionnement de la vanne,
- compatibilité de tous les matériaux aux fluides à maîtriser.

Les vannes à usage unique connues à ce jour présentent certaines de ces caractéristiques, mais pas toutes.

On connaît ainsi, par exemple, les vannes à usage unique décrites dans les documents US 6 302 171, US 6 260 570 et GB 2 424 692, qui comprennent chacune un percuteur apte, par son déplacement, à venir percer une membrane ou un opercule, sous l'action d'un moyen moteur commandé par un déclencheur. Cependant, aucune de ces vannes n'est parfaitement étanche et ne peut répondre au cahier de charges précité. US 6 260 570 B1 décrit une vanne selon la préambule de la revendication 1. La présente invention a pour but de remédier à cet inconvénient en proposant un dispositif de vanne à usage unique permettant de répondre à toutes les exigences précitées.

La vanne à usage unique selon l'invention est destinée à être installée sur une canalisation de transport d'un fluide, et elle se caractérise essentiellement en ce qu'elle comprend :
- un corps tubulaire destiné à être placé, de manière parfaitement étanche, sur ladite canalisation sur le trajet dudit fluide, ainsi qu'un élément mobile disposé dans ledit corps tubulaire et qui est susceptible d'y prendre deux positions, permettant, selon la position dudit élément mobile, que ledit fluide puisse ou non traverser ledit corps tubulaire, l'une étant une position d'attente tandis que l'autre est une position active;
- intérieurement audit corps tubulaire, un moyen moteur conçu apte à propulser ledit élément mobile pour le faire passer de sa position d'attente à la position active, et qui consiste en un moyen élastique précontraint ; et
- entièrement extérieurement audit corps tubulaire, d'une part un moyen de maintien de la précontrainte, et d'autre part un moyen de commande apte à permettre de désactiver ledit moyen de maintien de la précontrainte.

Le maintien de l'élément mobile par l'extérieur, permet que l'étanchéité soit parfaite.

Selon une caractéristique additionnelle de la vanne à usage unique selon l'invention, le moyen de maintien de la précontrainte est conçu apte à retenir l'élément mobile, lequel est conçu apte à réaliser le maintien de la précontrainte.

Selon une autre caractéristique additionnelle de la vanne à usage unique selon l'invention, le corps tubulaire comporte un tronçon prévu déformable dans le sens transversal de manière réversible, en sorte de pouvoir prendre au moins deux formes dont l'une, la première, permet le passage de l'élément mobile, tandis que l'autre, la seconde, ne permet pas ce passage, et que les moyens de maintien sont conçus aptes à permettre la déformation dudit tronçon, afin de le faire passer de la première forme à la seconde.

Selon une autre caractéristique additionnelle du mode de la vanne à usage unique selon l'invention, le moyen de maintien consiste en un moyen de pincement de l'élément mobile, apte à serrer ce dernier au travers du tronçon déformable.

Selon une autre caractéristique additionnelle de la vanne à usage unique selon l'invention, le moyen de pincement comporte deux mors conformés pour pouvoir être maintenus serrés par enroulement d'au moins un lien, et s'écarter lorsque ledit lien est relâché, ce dernier étant relié au moyen de commande qui est conçu apte à rompre ledit lien ou ce qui le relie audit moyen de commande.

Selon une variante de la vanne à usage unique selon l'invention, les deux mors sont indépendants et sont maintenus bridés par deux liens, à cet effet ils comportent chacun, à chacune de leurs extrémités, une extension apte à être maintenue avec l'extension en regard de l'autre mors, par l'enroulement d'un lien.

Selon une autre caractéristique additionnelle de la vanne à usage unique selon l'invention, le lien consiste en un ressort spiral enroulé sur une poulie constituée du rapprochement de deux éléments, chacun solidaire d'un mors du moyen de pincement.

Selon une autre caractéristique additionnelle du mode de réalisation préférentiel de la vanne à usage unique selon l'invention, le moyen de commande consiste en un déclencheur pyrotechnique.

La vanne à usage unique selon l'invention peut être une vanne normalement fermée ou une vanne normalement ouverte, dans l'un et l'autre cas, ce sont les caractéristiques du corps tubulaire et de l'élément mobile qui diffèrent.

Ainsi, la vanne à usage unique selon l'invention dans une version normalement fermée, et selon un mode de réalisation particulier, se caractérise essentiellement en ce que le corps tubulaire est fermé par un opercule déchirable, tandis l'élément mobile consiste en un moyen perforateur conçu apte à pouvoir se déplacer sous l'effet du moyen élastique, après relâchement de la précontrainte.

La vanne à usage unique selon l'invention, dans une version normalement ouverte, et selon un mode de réalisation particulier, se caractérise essentiellement en ce que l'extrémité de l'élément mobile, opposée à celle appliquée contre le moyen élastique, est configurée en un clapet apte, sous l'effet dudit moyen élastique, après relâchement de la précontrainte, à venir au contact d'un siège que comporte intérieurement le corps tubulaire, et à y être maintenu appliqué par ledit moyen élastique.

Les avantages et les caractéristiques de la vanne à usage unique selon l'invention, ressortiront plus clairement de la description qui suit et qui se rapporte au dessin annexé, lequel en représente plusieurs modes de réalisation non limitatifs.

Dans le dessin annexé :
- les figures 1a et 1b représentent des vues schématiques en coupe longitudinale d'une vanne à usage unique selon l'invention, dans une version normalement fermée, en position, respectivement fermée et ouverte.
- les figures 2a et 2b représentent des vues, respectivement en perspective et en élévation, d'une partie de la même vanne.
- la figure 3 représente une vue schématique en coupe d'un mode de réalisation d'une autre partie de la vanne selon l'invention.
- la figure 4a représente une vue schématique en coupe d'un autre mode de réalisation de la même partie de la vanne selon l'invention, tandis que la figure 4b représente une vue schématique de son mode de fabrication.
- la figure 5 représente une vue partielle en coupe longitudinale de la même vanne.
- les figures 6a et 6b représentent des vues en perspective de la même vanne, en position, respectivement, fermée et ouverte.
- la figure 7 représente une vue en coupe longitudinale d'une vanne à usage unique selon l'invention, dans une version normalement ouverte.
- les figures 8a et 8b représentent des vues schématiques partielles en coupe longitudinale, de la même vanne normalement ouverte en position, respectivement ouverte et fermée.

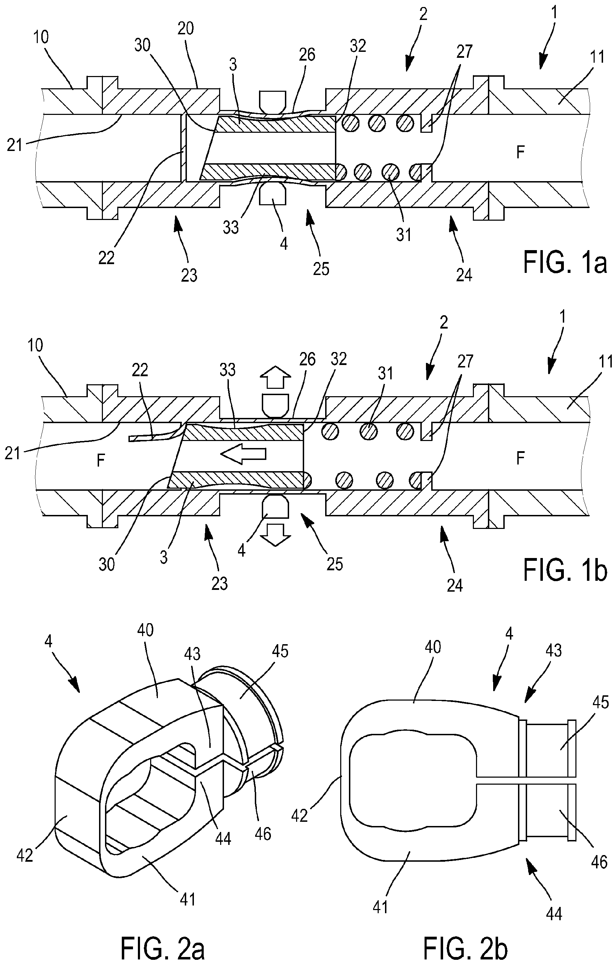

En référence aux figures 1a et 1b, on peut voir une canalisation 1 sur laquelle est disposée une vanne normalement fermée à usage unique 2 selon l'invention, intercalée entre deux bouts de conduite 10 et 11.

La vanne 2 comprend un corps tubulaire 20 auquel sont aboutés les deux bouts de conduites 10 et 11, et dont le canal interne 21 est obturé par un opercule 22, en sorte d'empêcher la circulation du fluide F dans la canalisation 1, en l'occurrence du bout de conduite 11 vers le bout de conduite 10.

Le corps tubulaire 20 est subdivisé en trois tronçons, deux tronçons extrêmes 23 et 24, et un tronçon intermédiaire 25, l'opercule 22 étant intégré au tronçon extrême 23.

Les deux tronçons extrêmes 23 et 24 sont, de préférence mais non limitativement, réalisés dans un ou des matériaux rigides, tandis que le tronçon intermédiaire 25 est prévu déformable.

On notera que le tronçon intermédiaire 25 peut se présenter sous différentes formes, sa déformabilité peut être obtenue par le matériau dont il est fait et/ou par la faible épaisseur de la paroi tubulaire 26 qui le constitue.

Dans le canal 21 est placé un moyen perforateur, à savoir un poinçon 3 qui se présente sous la forme générale d'un tube dont une extrémité 30, celle en regard de l'opercule 22, est conformée pour permettre le déchirement de ce dernier, en l'occurrence en forme de biseau. Le tronçon extrême 24 est muni intérieurement d'éléments 27 qui font saillie dans le canal 21, et qui constituent un moyen d'appui pour un ressort 31, contre lequel vient en butée le poinçon 3 par son extrémité 32, opposée à l'extrémité 30.

Par ailleurs, la vanne 2 comprend également un moyen de maintien tel qu'une pince 4, disposée au droit du tronçon intermédiaire 25, et conçue pour pouvoir pincer et déformer ce tronçon intermédiaire 25 afin d'immobiliser le poinçon 3 qui à cet effet présente, dans sa région médiane, une déformation périphérique concave 33. Préalablement au maintien du poinçon 3 par la pince 4, le ressort 31 aura été comprimé, et le poinçon 3 adossé à ce dernier.

Ainsi le ressort 31 est précontraint par l'intermédiaire du poinçon 3, lui-même maintenu par la pince 4.

En référence à la figure 2b, on peut voir que le desserrage de la pince 4 entraîne le relâchement du poinçon 3 qui, sous l'effet du ressort 31 et de la déformation de la paroi 26, se déplace en direction de l'opercule 22 qu'il déchire, laissant ainsi le passage au fluide F.

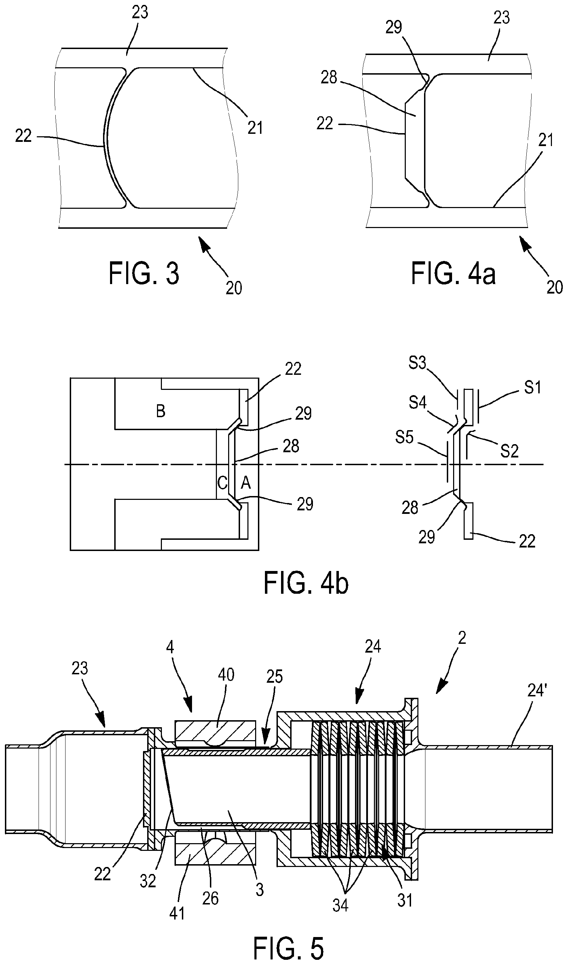

L'ouverture de la pince 4 peut être obtenue de différentes manières au travers de systèmes de libération très variés. En référence aux figures 3a et 3b, on peut voir un mode de réalisation particulier de la pince 4, adapté à un système de libération de conception simple.

Sur ces figures on peut voir que la pince 4 présente la forme d'un anneau ouvert, formant un C, et comportant deux parties diamétralement opposées 40 et 41, constituant des mors, reliées par une zone médiane 42 présentant une certaine flexibilité, tandis que les deux extrémités libres, respectivement 43 et 44, diamétralement opposées à la zone médiane 42, et qui sont maintenues écartées l'une de l'autre en position de repos, sont prolongées chacune, radialement par rapport audit anneau, d'une extension, respectivement 45 et 46, configurée en une demie poulie.

Le rapprochement des deux extrémités libres 43 et 44, conduit au resserrement des mors 40 et 46, et à la fermeture de la pince 4, ainsi qu'à la création d'une poulie venant de l'association des deux demi-poulies 45 et 46, autour de laquelle peut être enroulé un lien, non représenté, destiné à immobiliser la pince 4 en position de fermeture. Comme cela sera vu plus loin, ce lien peut consister avantageusement en un ressort spiral.

On notera que selon une variante, la zone médiane 42 de la pince 4 peut être remplacée par des extensions similaires aux extensions 45 et 46, destinées à être également maintenues par l'enroulement d'un lien.

En référence maintenant aux figures 3 et 4a, on peut voir deux modes de réalisation particuliers, mais non limitatifs, de l'opercule 22.

L'opercule 22 peut être de manière classique de forme sphérique comme représenté sur la figure 3, mais il peut aussi être, de préférence, de forme conique comme représenté sur la figure 4a. Des expérimentations ont permis de constater que la forme conique présentait de nombreux avantages, non seulement du point de vue résistance à la pression, mais aussi en ce qui concerne sa fabrication ainsi que la facilité de l'opération de désoperculage.

Cet opercule 22 conique comprend un disque central 28, bordé périphériquement d'une couronne tronconique 29 de plus faible épaisseur, au travers de laquelle l'opercule 22 est relié à la paroi tubulaire du tronçon 23, et qui est destinée à être coupée lors de l'opération de désoperculage. Le disque central 28 assure une certaine rigidité à l'opercule 22, en sorte que sous l'effet de la pression, exercée du côté concave de l'opercule 22, la couronne 29 soit uniquement sollicitée en traction.

Cette forme permet d'accéder à des niveaux de pression suffisants car la contrainte maximale dans l'opercule est d'un niveau similaire à celle dans le corps tubulaire 2.

Du point de vue fabrication, comme cela est visible sur la figure 4b, l'opercule 22 conique peut être fabriqué en trois phases de tournage sans reprise, sans que les efforts de coupe ne sollicitent la couronne tronconique 29. Ainsi, lors d'une phase A on réalise la mise au diamètre extérieur, le dressage de la surface S1, et la forme interne de l'opercule S2, lors d'une phase B on dresse la surface S3, lors d'une phase C on réalise la surface externe S4 et le tronçonnage de la surface S5.

L'opercule 22 ainsi usiné, sans démontage de l'ébauche, pourra l'être avec une très grande maîtrise de la précision souhaitée. Sa forme globale de disque favorise ensuite son soudage au corps tubulaire 20, en étant notamment inséré entre les tronçons 23 et 25.

En référence maintenant à la figure 5, on peut voir une vanne 2 selon l'invention, qui est constituée de l'assemblage par soudage de différents éléments.

Ainsi, les tronçons 24 et 25 consistent en une seule pièce, elle-même soudée au tronçon 23 après interposition de l'opercule 22, et alors que le ressort 31 est précontraint et que le poinçon 3 est maintenu par la pince 4.

On notera que dans cette version, le ressort 31 consiste en un empilement de rondelles Belleville 34, et que les moyens d'appui permettant de retenir ces rondelles Belleville 34, se présentent sous la forme d'un tube amont 24', de diamètre plus petit.

On notera également que le tronçon 23 est élargi par rapport au tronçon 25, en sorte de créer un dégagement apte à loger l'opercule 22 après désoperculage, tandis que le poinçon 3 est suffisamment engagé dans l'ouverture créée, sans possibilité de retour du fait du ressort 31, pour empêcher le repositionnement de l'opercule 22.

La vanne 2 ainsi réalisée répond à toutes les exigences requises en matière d'étanchéité, notamment en ce que cette étanchéité est réalisée sans utilisation de joint.

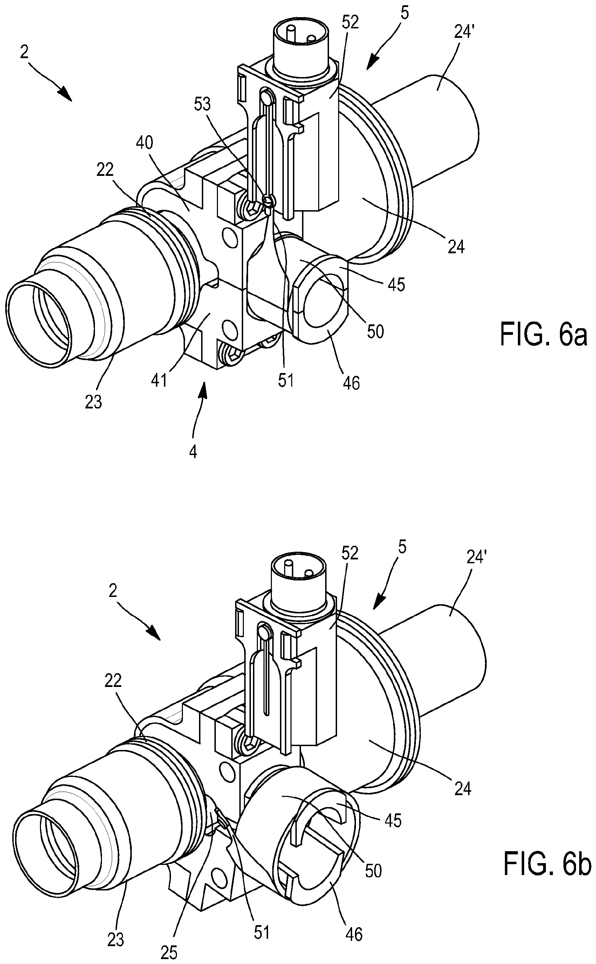

En référence maintenant aux figures 6a et 6b, on peut voir une vanne 2 dans son ensemble, et notamment son système de commande 5 permettant le déclenchement de l'ouverture de la vanne 2.

Comme on peut le voir sur la figure 6a, la vanne 2 est en position fermée, la pince 4 est fermée et maintient le poinçon 3, les demie-poulies 45 et 46 étant maintenues accolées par l'intermédiaire d'un ressort spiral 50 enroulé autour d'elles, et dont l'extrémité libre 51 est fixée à connecteur électrique 52 au travers d'un fil fusible 53.

Sur la figure 6b, on peut constater qu'après fusion du fil fusible 53, l'extrémité libre 51 du ressort spiral 50 a été relâchée ce qui a libéré le ressort spiral 50 et provoqué, sans choc, l'ouverture de la pince 4 et donc de la vanne 2.

Le montage de la vanne 2 selon l'invention telle que représentée peut être réalisé de la manière suivante :
- assemblage par soudage périphérique du tube amont 24' et du tronçon 24 après introduction des rondelles Belleville 34, puis mise en place du poinçon 3,
- montage provisoire de la pince 4, afin de permettre la réalisation de tests de fonctionnement sans la présence de l'opercule 22, un opercule factice surdimensionné pourra garantir une sécurité de fonctionnement comprenant une marge de motorisation,

Remarque : à la fin de cette étape il sera possible de remplacer le poinçon 3 ayant servi aux essais par un poinçon 3 neuf.
- mise en place d'un outillage de maintien, du côté du tube amont 24', pour pré-contraindre les rondelles Belleville 34, puis démontage de la pince 4,
- assemblage par soudage périphérique de l'opercule 22 sur le tronçon 25, puis du tronçon 23,
- réalisation des tests d'étanchéité,
- mise en place de la pince 4, et retrait de l'outillage de maintien.

La vanne 2 normalement fermée à usage unique selon l'invention obtenue permet de répondre à toutes les spécifications annoncées.

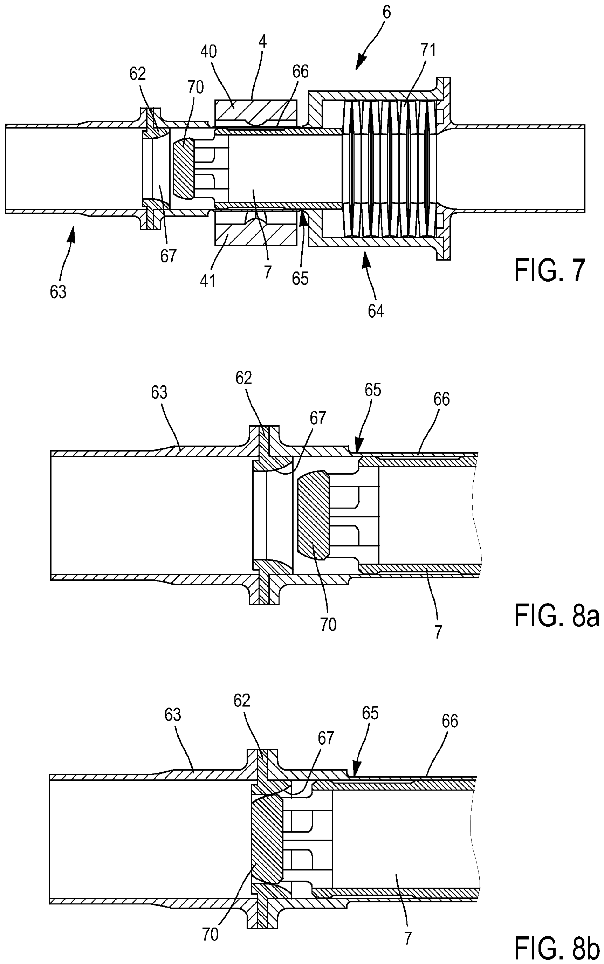

En référence maintenant aux figures 7, 8a et 8b, on peut voir une vanne 6 à usage unique selon l'invention, dans une version normalement ouverte.

Cette vanne 6 reprend les principales caractéristiques de la vanne 2 normalement fermée, elle se présente également sous la forme d'un corps tubulaire 60 comprenant un canal 61, et elle en diffère en ce que l'opercule et le poinçon sont remplacés par un système de clapet, comprenant un siège 62 et un clapet 7.

Ainsi, le corps tubulaire 60 comprend trois tronçons, deux tronçons extrêmes 63 et 64, et un tronçon intermédiaire 65 dont la paroi 66 est prévue déformable et apte à coopérer avec une pince extérieure 4, associée à un système de commande 5, non représenté, de manière à pouvoir retenir le clapet 7 qui contraint un ressort 71 logé dans le tronçon 64.

Le siège 62 consiste en un rétrécissement du diamètre interne du corps tubulaire 60, il se présente dans ce mode de réalisation en une pièce intercalée entre les tronçons 63 et 65, et offrant une ouverture 67 de forme globalement conique évasée du côté du tronçon 65.

Le clapet 7 se présente sous la forme d'un tube dont l'extrémité en regard du siège 62 est équipée d'une tête 70 formant un obturateur en forme de disque au bord conique allant en rétrécissant du côté du siège 62, et dont les dimensions sont aptes à lui permettre de venir, au gré de son déplacement sous l'effet du ressort 71, s'insérer et se bloquer dans l'ouverture 67 du siège 62, et ainsi obturer le passage, comme cela est illustré sur la figure 8b.

Le fonctionnement de la vanne normalement ouverte 6 est identique à celui de la vanne normalement fermée 2, à savoir que le relâchement de la pince 4 libère le clapet 7 qui, poussé par le ressort 71 vient obturer l'ouverture 67.

On notera de plus, que le ressort 71 est configuré pour, après libération du clapet 7, pouvoir continuer d'exercer une pression sur le clapet 7 de manière à maintenir le passage fermé.

## Revendications

1. Vanne à usage unique (2 ; 6) destinée à être installée sur une canalisation (1) de transport d'un fluide (F), **caractérisée en ce qu'**elle comprend :
- un corps tubulaire (20 ; 60) destiné à être placé, de manière parfaitement étanche, sur ladite canalisation sur le trajet dudit fluide, ainsi qu'un élément mobile (3 ; 7) disposé dans ledit corps tubulaire (20 ; 60) et qui est susceptible d'y prendre deux positions permettant, selon la position dudit élément mobile (3 ; 7), que ledit fluide (F) puisse ou non traverser ledit corps tubulaire (20 ; 60), l'une étant une position d'attente tandis que l'autre est une position active;
- intérieurement audit corps tubulaire (20 ; 60), un moyen moteur (31 ; 71) conçu apte à propulser ledit élément mobile (3 ; 7) pour le faire passer de sa position d'attente à la position active, et qui consiste en un moyen élastique précontraint ; et
- d'une part un moyen (4) de maintien de la précontrainte, et d'autre part un moyen de commande (5) apte à permettre de désactiver ledit moyen (4) de maintien de la précontrainte , **caractérisée en ce que** le moyen (4) de maintien de la précontrainte et le moyen de commande (5) sont disposés entièrement à l'extérieur dudit corps tubulaire.

2. Vanne à usage unique (2 ; 6) selon la revendication 1, **caractérisée en ce que** le moyen (4) de maintien de la précontrainte est conçu apte à retenir l'élément mobile (3 ; 7), lequel est conçu apte à réaliser le maintien de la précontrainte.

3. Vanne à usage unique (2 ; 6) selon la revendication 1 ou la revendication 2, **caractérisée en ce que** le corps tubulaire (20; 60) comporte un tronçon (25 ; 65) prévu déformable dans le sens transversal de manière réversible, en sorte de pouvoir prendre au moins deux formes dont l'une, la première, permet le passage de l'élément mobile (3 ; 7), tandis que l'autre, la seconde, ne permet pas ce passage, et que les moyens (4) de maintien sont conçus aptes à permettre la déformation dudit tronçon (25 ; 65), afin de le faire passer de la première forme à la seconde.

4. Vanne à usage unique (2 ; 6) selon la revendication 3, **caractérisée en ce que** le moyen de maintien (4) consiste en un moyen de pincement de l'élément mobile (3 ; 7), apte à serrer ce dernier au travers de la paroi (26 ; 66) du tronçon déformable (25 ; 65).

5. Vanne à usage unique (2 ; 6) selon la revendication 4, **caractérisée en ce que** le moyen de pincement (4) comporte deux mors (40, 41) conformés pour pouvoir être maintenus serrés par enroulement d'au moins un lien (50), et s'écarter lorsque ledit lien (50) est relâché, ce dernier étant relié au moyen de commande (5) qui est conçu apte à rompre ledit lien (50) ou ce qui le relie audit moyen de commande (5).

6. Vanne à usage unique (2 ; 6) selon la revendication 5, **caractérisée en ce que** les deux mors (40, 41) sont indépendants et sont maintenus bridés par deux liens, à cet effet ils comportent chacun, à chacune de leurs extrémités, une extension apte à être maintenue avec l'extension en regard de l'autre mors, par l'enroulement d'un lien.

7. Vanne à usage unique (2 ; 6) selon la revendication 5 ou la revendication 6, **caractérisée en ce que** le lien (50) consiste en un ressort spiral enroulé sur une poulie constituée du rapprochement de deux éléments (45, 46), chacun solidaire d'un mors (40, 41) du moyen de pincement (4).

8. Vanne à usage unique (2 ; 6) selon la revendication 7, **caractérisée en ce que** le moyen de commande (5) consiste en un déclencheur pyrotechnique.

9. Vanne à usage unique (2) selon l'une quelconque des revendications 1 à 8, **caractérisée en ce qu'**elle consiste en une vanne à usage unique normalement fermée, le corps tubulaire (20) est fermé par un opercule déchirable (22), tandis l'élément mobile (3) consiste en un moyen perforateur conçu apte à pouvoir se déplacer sous l'effet du moyen élastique (31), après relâchement de la précontrainte.

10. Vanne à usage unique (6) selon l'une quelconque des revendications 1 à 8, **caractérisée en ce qu'**elle consiste en une vanne à usage unique normalement ouverte, l'extrémité (70) de l'élément mobile (7), opposée à celle appliquée contre le moyen élastique (71), est configurée en un clapet apte, sous l'effet dudit moyen élastique (71), après relâchement de la précontrainte, à venir au contact d'un siège (62) que comporte intérieurement le corps tubulaire (60), et à y être maintenu appliqué par ledit moyen élastique (71).

## Patentansprüche

1. Einwegventil (2; 6), dazu bestimmt, in einer Leitung (1) zum Transport eines Fluids (F) angebracht zu werden, **dadurch gekennzeichnet, dass** es Folgendes umfasst:
- einen rohrförmigen Körper (20; 60), bestimmt, um auf eine vollkommen dichte Weise in der besagten Leitung auf dem Weg des besagten Fluids angebracht zu werden, sowie ein bewegliches Element (3; 7), das in dem besagten rohrförmigen Körper (20; 60) angeordnet und geeignet ist, dort zwei Positionen einzunehmen, die es in Abhängigkeit von der Position des besagten beweglichen Elements (3; 7) erlauben, dass das Fluid (F) durch den rohrförmigen Körper (20; 60) fliessen kann oder nicht, wobei die eine eine Bereitschaftsposition ist, während die andere eine aktive Position ist;
- im Innern der rohrförmigen Körper (20; 60), eine Motoreinrichtung (31; 71), die geeignet vorgesehen ist, das bewegliche Element (3; 7) anzutreiben, um es dazu zu bringen, von seiner Bereitschaftsposition in die aktiven Position zu gehen, und die aus einem vorgespannten elastischen Mittel besteht; und
- einerseits, ein Mittel (4) zum Aufrechterhalten der Vorspannung und, andererseits, eine Steuereinrichtung (5), die geeignet ist, es zu ermöglichen, das besagte Mittel (4) zum Aufrechterhalten der Vorspannung zu deaktivieren;
- **dadurch gekennzeichnet, dass** das Mittel (4) zum Aufrechterhalten der Vorspannung und die Steuereinrichtung (5) vollständig außerhalb des besagten rohrförmigen Körpers angeordnet sind.

2. Einwegventil (2; 6) nach Anspruch 1, **dadurch gekennzeichnet, dass** das Mittel (4) zum Aufrechterhalten der Vorspannung geeignet vorgesehen ist, um das bewegliche Element (3; 7) zurückzuhalten, welches geeignet vorgesehen ist, um die Vorspannung aufrechtzuerhalten.

3. Einwegventil (2; 6) nach Anspruch 1 oder Anspruch 2, **dadurch gekennzeichnet, dass** der rohrförmige Körper (20; 60) einen Abschnitt (25; 65) umfasst, der in der Querrichtung auf reversible Weise verformbar vorgesehen ist, sodass er mindestens zwei Formen annehmen kann, von denen eine, die erste, den Durchgang des beweglichen Elements (3; 7) erlaubt, während die andere, die zweite, diesen Durchgang nicht erlaubt, und dass die Mittel (4) zum Aufrechterhalten geeignet vorgesehen sind, um die Verformung des besagten Abschnitts (25; 65) zu erlauben, um ihn von der ersten Form in die zweite Form gehen zu lassen.

4. Einwegventil (2; 6) nach Anspruch 3, **dadurch gekennzeichnet, dass** das Mittel (4) zum Aufrechterhalten aus einem Mittel zum Klemmen des beweglichen Elements (3; 7) besteht, das geeignet ist, dieses letztere durch die Wand (26; 66) des verformbaren Abschnitts (25; 65) hindurch zu klemmen.

5. Einwegventil (2; 6) nach Anspruch 4, **dadurch gekennzeichnet, dass** das Klemmmittel (4) zwei Backen (40, 41) umfasst, die so geformt sind, dass sie durch Aufwickeln von mindestens einer Verbindung (50) geklemmt gehalten werden können, und von einander entfernt werden können, wenn die besagte Verbindung (50) gelöst wird, wobei diese letztere mit der Steuereinrichtung (5) verbunden ist, die geeignet vorgesehen ist, um die besagte Verbindung (50) oder das, was sie mit der Steuereinrichtung (5) verbindet, zu brechen.

6. Einwegventil (2; 6) nach Anspruch 5, **dadurch gekennzeichnet, dass** die Zwei Backen (40, 41) unabhängig und mittels zwei Verbindungen aneinander geflanscht sind, zu diesem Zweck umfassen sie jeweils an jedem ihrer Enden eine Verlängerung, die geeignet ist, durch Aufwicklung mit der gegenüberliegenden Verlängerung der anderen Backe gehalten zu werden.

7. Einwegventil (2; 6) nach Anspruch 5 oder Anspruch 6, **dadurch gekennzeichnet, dass** die Verbindung (50) aus einer Spiralfeder besteht, die um eine aus der Annäherung von zwei Elementen (45, 46) besteht, die jeweils fest mit einer Backe (40, 41) der Klemmeinrichtung (4) verbunden sind, gewickelt ist.

8. Einwegventil (2; 6) nach Anspruch 7, **dadurch gekennzeichnet, dass** die Steuereinrichtung (5) aus einem pyrotechnischen Auslöser besteht.

9. Einwegventil (2) nach irgendeinem der Ansprüche 1 bis 8, **dadurch gekennzeichnet, dass** es aus einem normal geschlossenen Einwegventil besteht, wobei der rohrförmige Körper (20) durch eine zerreißbare Abdeckung (22) geschlossen ist, während das bewegliche Element (3) aus einer Bohreinrichtung besteht, die geeignet vorgesehen ist, sich nach dem Lösen der Vorspannung unter der Wirkung des elastischen Mittels (31) zu verschieben.

10. Einwegeventil (6) nach irgendeinem der Ansprüche 1 bis 8, **dadurch gekennzeichnet, dass** es aus einem normal geöffneten Einwegventil besteht, wobei das Ende (70) des beweglichen Elements (7), das demjenigen, an dem das elastische Mittel (71) anliegt, entgegengesetzt ist, als eine Klappe ausgestaltet ist, die geeignet ist, nach dem Lösen der Vorspannung unter der Wirkung des elastischen Mittels (71) mit einem Sitz (62), welchen der rohrförmige Körper (60) inwendig umfasst, in Kontakt zu kommen und dort durch das elastische Mittel (71) anliegend gehalten zu werden.

## Claims

1. Single-use valve (2; 6) to be installed on a line (1) for transporting a fluid (F), wherein it comprises:
- a tubular body (20; 60) intended to be placed, in a perfectly tight way, on said line on the path of said fluid, as well as a movable member (3; 7) arranged in said tubular body (20; 60) and likely to adopt two positions in same, thus permitting, depending on the position of said movable member (3; 7), that said fluid (F) may or may not pass through said tubular body (20; 60), one being a stand-by position, while the other one is an active position;
- inside said tubular body (20; 60), a driving means (31; 71) designed capable of propelling said movable member (3; 7) in order to cause it to move from its stand-by position to the active position, and which consists of a pre-stressed springy means; and
- on the one hand, a means (4) for maintaining the pre-tension and, on the other hand, a control means (5) capable of permitting to de-activate said means (4) for maintaining the pre-tension, wherein the means (4) for maintaining the pre-tension and the control means (5) are arranged completely externally to said tubular body.

2. Single-use valve (2; 6) according to claim 1, wherein the means (4) for maintaining the pre-tension is designed capable of retaining the movable member (3; 7), which is designed capable of ensuring the maintaining of the pre-tension.

3. Single-use valve (2; 6) according to claim 1 or claim 2, wherein the tubular body (20; 60) includes a section (25; 65) designed reversibly deformable in the transverse direction, so as to be capable of adopting at least two shapes, one of which, the first one, permits the passing-through of the movable member (3; 7), while the other, the second one, does not permit this passing-through, and that the holding means (4) are designed capable of permitting the deformation of said section (25; 65), so as to cause it to pass from the first shape into the second one.

4. Single-use valve (2; 6) according to claim 3, wherein the holding means (4) consists of a means for wedging the movable member (3; 7), capable of clamping the latter through the wall (26; 66) of the deformable section (25; 65).

5. Single-use valve (2; 6) according to claim 4, wherein the wedging means (4) includes two jaws (40, 41) shaped so as to be capable of being held clamped by winding of at least one link (50), and of moving away when said link (50) is released, the latter being connected to the control means (5), which is designed capable of breaking said link (50) or what connects it to said control means (5).

6. Single-use valve (2; 6) according to claim 5, wherein the two jaws (40, 41) are independent and are held clamped by two links, to this end they each include, at each of their ends, an extension capable of being held with the extension in front of the other jaw, through the winding of a link.

7. Single-use valve (2; 6) according to claim 5 or claim 6, wherein the link (50) consists of a helical spring wound on a pulley formed by bringing two elements (45, 46) close to each other, each integral with a jaw (40, 41) of the wedging means (4) .

8. Single-use valve (2; 6) according to claim 7, wherein the control means (5) consists of a pyrotechnic trigger.

9. Single-use valve (2) according to any one of claims 1 to 8, wherein it consists of a normally closed single-use valve, the tubular body (20) is closed by a tear-off cap (22), while the movable member (3) consists of a perforating means designed capable of being movable under the action of springy means (31), after releasing the pre-tension.

10. Single-use valve (6) according to any one of claims 1 to 8, wherein it consists of a normally open single-use valve, the end (70) of the movable member (7), opposite the one applied against the springy means (71), is configured by a flap capable, under the action of said springy means (71), after releasing the pre-tension, of entering into contact with a seat (62) the tubular body (60) includes internally, and of being held applied against same by said springy means (71).
